# EUROPÄISCHE PATENTSCHRIFT

(11) **EP 1 314 217 B1**
(45) Veröffentlichungstag und Bekanntmachung des Hinweises auf die Patenterteilung: **12.05.2010**
(21) Anmeldenummer: 01953843.8
(22) Anmeldetag: 29.06.2001
(51) Int. Cl.: H01M 8/02, H01M 8/24, H01M 8/12

(54) **HOCHTEMPERATURBRENNSTOFFZELLE**
HIGH TEMPERATURE FUEL CELL
PILE A COMBUSTIBLE HAUTE TEMPERATURE

(30) Priorität: 12.07.2000 DE 10033898
(43) Veröffentlichungstag der Anmeldung: 28.05.2003
(73) Patentinhaber: Forschungszentrum Jülich GmbH, 52425 Jülich (DE)
(72) Erfinder: BRAM, Martin, 52428 Jülich (DE); BUCHKREMER, Hans, Peter, 52525 Heinsberg (DE); STÖVER, Detlev, 52382 Niederzier (DE); RINGEL, Helmut, 52382 Niederzier (DE)
(86) Internationale Anmeldenummer: PCT/DE2001/002459
(87) Internationale Veröffentlichungsnummer: WO 2002/005368

(56) Entgegenhaltungen:
- EP-A- 0 410 159
- EP-A- 0 418 528
- EP-A- 0 440 968
- WO-A-01/04981
- DE-A- 4 016 157
- DE-A- 19 517 451
- US-A- 5 649 983
- PATENT ABSTRACTS OF JAPAN vol. 014, no. 117 (E-0898), 5. März 1990 (1990-03-05) & JP 01 313855 A (NKK CORP), 19. Dezember 1989 (1989-12-19)

## Beschreibung

Die Erfindung bezieht sich auf eine Hochtemperaturbrennstoffzelle.

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, beispielsweise die SOFC-Brennstoffzelle aus der Druckschrift DE 44 30 958 C1 sowie die PEM-Brennstoffzelle aus der Druckschrift DE 195 31 852 C1.

Die SOFC-Brennstoffzelle wird auch Hochtemperaturbrennstoffzelle genannt, da ihre Betriebstemperatur bis zu 1000 °C betragen kann. An der Kathode einer Hochtemperaturbrennstoffzelle bilden sich in Anwesenheit des Oxidationsmittels Sauerstoffionen. Die Sauerstoffionen diffundieren durch den Elektrolyten und rekombinieren auf der Anodenseite mit dem vom Brennstoff stammenden Wasserstoff zu Wasser. Mit der Rekombination werden Elektronen freigesetzt und so elektrische Energie erzeugt.

Mehrere Brennstoffzellen werden in der Regel zur Erzielung großer elektrischer Leistungen durch verbindende Elemente, auch Interkonnektoren genannt, elektrisch und mechanisch miteinander verbunden. Ein Beispiel für ein verbindendes Element stellt die bipolare Platte dar. Mittels bipolarer Platten entstehen übereinander gestapelte, elektrisch in Serie geschaltete Brennstoffzellen. Diese Anordnung wird Brennstoffzellenstapel genannt. Die Brennstoffzellenstapel bestehen aus den Interkonnektoren und den Elektroden-Elektrolyt-Einheiten. Interkonnektoren besitzen neben den elektrischen und mechanischen Eigenschaften regelmäßig auch Gasverteilerstrukturen. Bei der bipolaren Platte wird dies durch Stege mit Elektrodenkontakt realisiert, die die Gaskanäle zur Versorgung der Elektroden voneinander trennen (DE 44 10 711 C1). Gasverteilerstrukturen bewirken, daß die Betriebsmittel gleichmäßig in den Elektrodenräumen (Räume in denen sich die Elektroden befinden) verteilt werden.

Nachteilig können bei Brennstoffzellen und Brennstoffzellenstapeln folgende Probleme auftreten:
- Metallische bipolare Platten mit hohem Aluminiumgehalt bilden Al₂O₃-Deckschichten aus, die nachteilig wie ein elektrischer Isolator wirken.
- Bei zyklischer Temperaturbelastung treten allgemein Wärmespannungen, verbunden mit Relativbewegungen der Einzelkomponenten zueinander, auf; diese resultieren aus dem unterschiedlichen Ausdehnungverhalten, bzw.
- den unterschiedlichen Ausdehnungskoeffizienten der verwendeten Materialien im Betrieb.
- Zur Abdichtung einzelner Komponenten einer Brennstoffzelle werden im Stand der Technik Glaslote mit geringer Elastizität eingesetzt. Dadurch besteht durch Wärmespannungen die Gefahr der Rißbildung und des Haftungsverlusts.

Diesbezüglich besteht im Stand der Technik noch keine ausreichende Kompatibilität zwischen den vergleichsweise hohen Ausdehnungskoeffizienten z.B. der metallischen bipolaren Platten und den derzeit bekannten Elektrodenmaterialien, deren Ausdehnungskoeffizienten vergleichsweise gering sind. Wärmespannungen können einerseits zwischen Elektroden und Interkonnektoren auftreten. Diese können Zerstörungen innerhalb der Brennstoffzelle zur Folge haben. Dies betrifft andererseits aber auch die in Brennstoffzellen häufig eingesetzten Glaslote, die die Dichtigkeit der Brennstoffzellen gewährleisten sollen.

Aus DE 40 16 157 A ist ein Brennstoffzellenstapel mit mindestens zwei Hochtemperatur-Brennstoffzellen bekant, die jeweils eine Anode, einen Elektrolyten, eine Kathode sowie einen Kathoden- und einen Anodeninterkonnektor aufweisen. Zwischen Anode und Anodeninterkonnektor ist wenigstens ein elastisches Mittel zum Auffangen von Relativbewegungen angeordnet, welches z. B. in Form eines vollelastischen Stromkollektors oder als gewellter oder gestanzter profilierter Plattenkörper mit federnden lamellenartigen Erhebungen offenbart wird. Ferner ist der Anoden- und Kathodeninterkonnektor über einen isolierenden Distanzrahmen mit einer rahmenförmigen elastischen Dichtung elektrisch isolierend verbunden und Zwischen dem Rahmen und der Anode sind Mittel zur elektrischen Isolierung angeordnet.

In EP-A 0 440 968 wird ein Brennstoffzellenstapel mit mindestens zwei Hochtemperatur-Brennstoffzellen schrieben, umfassend jeweils eine Anode, einen Elektrolyten, eine Kathode sowie einen Kathoden- und einen Anodeninterkonnektor. Auch hier wird ein vollelastischer Stromkollektor als ein elastisches Mittel zwischen Anode und Anodeninterkonnektor angeordnet, um Relativbewegungen aufzufangen.

Aufgabe der Erfindung ist es daher, eine Brennstoffzelle bereit zu stellen, in der eine langzeitstabile mechanisch-elektrische Kontaktierung der Kathode bzw. der Anode durch die Interkonnektoren gewährleistet ist. Probleme, die auf Wärmespannungen beruhen, z.B. mangelnde Dichtigkeit, sollen ausgeschlossen werden.

Diese Aufgabe wird durch eine Hochtemperaturbrennstoffzelle nach Anspruch 1 gelöst. Sie umfaßt eine Anode, einen Elektrolyten, eine Kathode sowie einen Kathodeninterkonnektor und einen Anodeninterkonnektor, wobei zwischen Anode und Anodeninterkonnektor mindestens ein elastisches Mittel zum Auffangen von Relativbewegungen angeordnet ist. Hierdurch werden Wärmespannungen auf der Anodenseite, die auf dem unterschiedlichen Ausdehnungsverhalten der Einzelkomponenten beruhen, ausgeglichen.

Vorteilhaft weist der Kathodeninterkonnektor eine vorstehende Fläche auf, welche die Kathode kontaktiert (Anspruch 2). Die vorstehende Fläche bewirkt, daß der Kathodeninterkonnektor umlaufend einen Rand aufweist, dessen Höhe im Querschnitt kleiner ist als an der Kathodenkontaktfläche. Dies hat zur Folge, daß auch kathodenseitig eine gewisse Bewegungsfreiheit der Elektroden vorliegt. Das Ausdehnungsverhalten der Materialien und insbesondere Wärmespannungen kann dann anoden- und kathodenseitig besser ausgeglichen werden.

Erfindungsgemäß ist zwischen dem Kathodeninterkonnektor und dem Elektrolyten ein weiteres elastisches Mittel, insbesondere ein wellenförmig geprägtes Lochblech angeordnet (Anspruch 3). Hierdurch werden die Elektroden und der Elektrolyt frei aufgehängt und eine besonders hohe Bewegungsfreiheit der Elektroden erzielt. Eine im Betrieb häufig auftretende Durchbiegung der Einzelkomponenten wird dadurch verhindert. Das Lochblech muß nicht durchgängig wellenförmig geprägt sein, sondern kann einen planen Rand aufweisen, um es durch andere Komponenten der Brennstoffzelle besser stabilisieren zu können.

Die Kathode kann eine kleinere Grundfläche als die Anode aufweisen (Anspruch 4). Das Lochblech kann dadurch über seine Wellentäler den Elektrolyt an der von der Kathode nicht bedeckten Fläche gasdicht kontaktieren (Anspruch 5). Die Kathode wird so vor Druck und Zerstörungen bewahrt. Durch den gasdichten Kontakt kann darauf verzichtet werden, die im Stand der Technik verwendeten Glaskeramiken zum Abdichten der Fugen zwischen Brennstoffzelle und Interkonnektoren zu verwenden, die den Kathoden- vom Anodenraum trennen. Diese Fugen sind auf Grund des unterschiedlichen Ausdehnungsverhaltens besonders kritisch und weisen die oben genannten Nachteile bezüglich der Rißbildung auf. Die Elastizität des Lochblechs kann über dessen Stärke, den Flankenwinkel der Wellenberge und die Anzahl der Wellen variiert werden. Das Wellenprofil ist nach dem Zusammenfügen der Hochtemperaturbrennstoffzelle zwischen Kathodeninterkonnektor und Elektrolyt gestaucht, wodurch letztlich Druck auf die Anode ausgeübt wird. Dadurch entsteht die erwünschte Dichtwirkung zwischen Kathoden- und Anodenraum. Das Lochblech kann aus einer Hochtemperaturlegierung, insbesondere einer Eisen-Chrom-Aluminium-Legierung, z.B. Aluchrom^{®} YHf (Werkstoffnr.: 1.4767), oder einer Nickelbasis-Legierung, z.B. Nicrofer^{®} 6025 HT (Werkstoffnr.: 2.4633), bestehen. Wesentlich ist, daß das Material hohe Kriechbeständigkeit aufweist und eine bei hohen Temperaturen ausreichende Elastizität besitzt.

Der Kathodeninterkonnektor kann über einen Rahmen elektrisch isolierend mit dem Anodeninterkonnektor verbunden sein (Anspruch 6). Der Rahmen besitzt die Funktion eines isolierenden Verbindungselements und eines Abstandhalters für die beiden Interkonnektoren. Beim Zusammenpressen der Hochtemperaturbrennstoffzelle wird durch den Rahmen die maximale Kraft begrenzt, die auf das Lochblech auf der Kathodenseite und das weitere elastische Mittel an der Anodenseite einwirken kann.

Der Rahmen kann mit dem Lochblech verbunden sein (Anspruch 7). Hierzu sollte das Lochblech einen planen Rand aufweisen. Die Verbindung kann über ein Löt- oder Schweißverfahren hergestellt werden. Da die Höhe des Kathodeninterkonnektors durch die vorstehende Fläche im Querschnitt an seinem Rand kleiner ist als an der Kathodenkontaktfläche, kann an besagtem Rand der Kathodeninterkonnektor umlaufend das gewellte Lochblech an wiederum dessen planen Rand kontaktieren. Dies führt zur mechanischen Stabilisierung des Lochblechs.

Zwischen den Wellentälern des Lochblechs und dem Elektrolyt kann eine Glaskeramikschicht angeordnet sein (Anspruch 8). Diese Schicht dient dazu, die Dichtigkeit zwischen den Wellentälern und dem Elektrolyt zu erhöhen und abgeschlossene, gasdichte Elektrodenräume zu schaffen.

Vorteilhaft besteht der Rahmen aus einer aluminiumhaltigen Eisen-Basis-Legierung (Anspruch 9). Ein solcher Rahmen kann unter Luftzufuhr oberhalb 1000 °C geglüht werden. Die Oberfläche des Rahmens weist nach diesem Vorgang eine elektrisch isolierende Aluminiumoxidschicht auf (Anspruch 10). Die Rahmenoberfläche kann somit auf leichte Weise elektrisch isolierend angefertigt werden. Zwischen Rahmen und Anodeninterkonnektor können aber auch Mittel zur elektrischen Isolierung des Rahmens angeordnet sein (Anspruch 11). Als Mittel kann eine Glaskeramikschicht angeordnet sein (Anspruch 12). Da Rahmen und Interkonnektor bei hohen Temperaturen ein sehr ähnliches Ausdehnungsverhalten besitzen, ist diese Stelle für eine Dichtung mit einer Glaskeramik weniger kritisch. Es ist aber auch möglich, daß eine Glimmerschicht als Mittel zur elektrischen Isolierung des Rahmens angeordnet ist (Anspruch 13). Diese kann über eine geeignete Pastentechnik aufgetragen werden. Eine solche Glimmerschicht weist durch den schichtartigen Aufbau eine ausreichende Elastizität auf, welche im Betrieb Rißbildungen und Haftungsverlust vermeidet. Wird auf solche zusätzlichen Mittel zurückgegriffen, ist man bei der Wahl des Rahmenmaterials nicht auf aluminiumhaltige Eisen-Basis-Legierungen beschränkt.

Zwischen Rahmen und Anode können Mittel zur elektrischen Isolierung angeordnet sein (Anspruch 14). Das elektrisch isolierende Mittel ist so angeordnet, daß es eine elektrische Isolierung zwischen Rahmen und Anode gewährleistet und einen Kurzschluß verhindert. Nach dem Zusammenbau der Hochtemperaturbrennstoffzelle wird der Abstand zwischen Rahmen und Anode in der Regel gering sein; es können daher diese isolierenden Mittel erforderlich werden. Die Anode kann eine Glaskeramikschicht als Mittel zur elektrischen Isolierung aufweisen (Anspruch 15). Diese kann auf die dem Rahmen zugewandten Seiten aufgetragen werden. Glaskeramiken können auf einfache Weise aufgetragen werden. Die Isolierung zwischen Anode und Rahmen kann aber auch durch den Elektrolyt gewährleistet werden. Hierzu muß die Anode bis auf die der Kathode gegenüberliegenden Seite mit dem Elektrolyt beschichtet sein (Anspruch 16). Auf Grund des Materials des Elektrolyten, das beispielsweise aus Yttrium-stabilisiertem ZrO₂ besteht, ist die elektrische Isolierung gewährleistet.

Zwischen Anodeninterkonnektor und Anode ist gemäß Anspruch 1 mindestens ein elastisches Mittel zum Auffangen von Relativbewegungen angeordnet. Dies kann eine mit Öffnungen versehene, wellenförmig geprägte, elastische Folie sein (Anspruch 17). Das Material kann aus einer Hochtemperaturlegierung, insbesondere einer Eisen-Chrom-Aluminium-Legierung, z.B. Aluchrom^{®} YHf, oder einer Nickelbasis-Legierung, z.B. Nicrofer^{®} 6025 HT, bestehen. Wesentlich ist, daß das Material hohe Kriechbeständigkeit aufweist und eine bei hohen Temperaturen ausreichende Elastizität aufweist. Außerdem weist die Folie Öffnungen auf. Die Öffnungen können auf einfache Weise vor der Prägung aus der Folie herausgestanzt worden sein. Die Öffnungen dienen der Versorgung der Anode mit Brennstoff. Ist der Anodeninterkonnektor beispielsweise als bipolare Platte ausgebildet, so strömt der Brennstoff aus Gaskanälen durch die Öffnungen der Folie an die Anode.

In einer weiteren Ausgestaltung der Erfindung ist vorgesehen, daß die Folie auf beiden Seiten zumindest teilweise Nickel-Aluminium-Legierungen aufweist (Anspruch 18). Hierzu ist die elastische Folie mit Folien, die 99 % Nickel enthalten, beidseitig durch Legierungsbildung verbunden. Die Nickel-Aluminium-Legierungen sorgen auf Grund der Hochtemperaturbeständigkeit des Nickels für eine gute und langzeitstabile elektrische Leitfähigkeit der Folie an deren Oberfläche.

Vorteilhaft enthält der Anodeninterkonnektor Aluminium (Anspruch 19). Dann ergeben sich zusätzliche Möglichkeiten, die elektrische Leitfähigkeit zwischen dem Anodeninterkonnektor und dem elastischen Mittel bzw. der Anode zu gewährleisten. So kann auch der Anodeninterkonnektor zumindest teilweise Nickel-Aluminium-Legierungen aufweisen (Anspruch 20). Hierzu muß mindestens eine Nickel enthaltende Folie mit den Kontaktflächen des Anodeninterkonnektors für die Anode durch Legierungsbildung verbunden sein (Anspruch 21). Dies kann entweder die Nickel-Aluminium-Legierungen aufweisende geprägte Folie sein, deren Wellentäler mit dem Anodeninterkonnektor durch Legierungsbildung verbunden sind (Anspruch 22). Es können aber auch weitere Nickelfolien mit dem Anodeninterkonnektor durch Legierungsbildung verbunden sein. Der Anodeninterkonnektor enthält somit auf den Kontaktflächen zur gewellten Folie zumindest teilweise Nickel-Aluminium-Legierungen.

Bei den Nickel-Aluminium-Legierungen kann es sich z.B. um Nickelaluminide (z.B. NiA1, NiAl₂, Ni₃Al) handeln. Solche Nickel-Aluminium-Legierungen bieten generell als Kontaktschicht in Hochtemperaturbrennstoffzellen folgende Vorteile:
- Nickel-Aluminium-Legierungen wirken als Diffusionsbarriere für Legierungsbestandteile der verwendeten Stähle von Interkonnektoren und anderen Komponenten der Brennstoffzelle und vermeiden so die Bildung schlecht leitender Korrosionsprodukte (z.B. Aluminiumoxid) an Grenzflächen, beispielsweise zwischen Anodeninterkonnektor und Nickelbeschichtung der Folie.
- Nickel-Aluminium-Legierungen sind hochtemperaturbeständig (z.B. Schmelzpunkt von NiAl: 1638 °C).
- Nickel-Aluminium-Legierungen besitzen eine ausreichende elektrische Leitfähigkeit.
- Geringe Material- und Verarbeitungskosten.

Durch die Eigenschaften der Nickel-Aluminium-Legierungen wird die Bildung isolierender Aluminiumoxidschichten vermieden. Daraus folgert, daß durch die Nickel-Aluminium-Legierungen eine Verringerung des Kontaktwiderstandes, bzw. eine hohe Leitfähigkeit an der Anodenseite erzielt wird, die zu einer langzeitstabilen Kontaktierung, besonders auch im Brennstoffzellenstapel, führt.

Es hat sich gezeigt, daß Heißpreßverfahren bis 1150 °C besonders gut geeignet sind, langzeitstabile Nickel-Aluminium-Legierungen zu erzeugen. Allerdings kommen auch Schweißverfahren unter einer Schutzgasatmosphäre sowie bedingt auch Plasmaspritzverfahren in Betracht. Eine weitere Möglichkeit zur Erzeugung von Nickel-Aluminium-Legierungen besteht in der Verwendung einer galvanischen Vernickelung. Anschließend erfolgt dann eine Glühung der vernickelten Oberflächen im Vakuum unter Bildung von Nickel-Aluminium-Legierungen, vorzugsweise bei 1150 °C.

Zwischen Anode und Anodeninterkonnektor kann ein elastisches Nickelnetz angeordnet sein (Anspruch 23). Das Nickelnetz gleicht nicht nur die Relativbewegungen zwischen Anode und Anodeninterkonnektor aus, sondern bietet zusätzlich den Vorteil, daß es den elektrischen Kontakt zur Anode über die Gitterpunkte des Netzes gleichmäßig gewährleistet und somit die oben genannten nachteiligen Fertigungstoleranzen ausgleicht. Es ist denkbar, daß anodenseitig beide elastischen Mittel, also Nickelnetz und wellenförmig geprägte Folie, angeordnet werden.

Schließlich kann zwischen dem Kathodeninterkonnektor und der Kathode eine Kathodenkontaktschicht angeordnet sein (Anspruch 24). Diese kann bündig auf der Kathode liegen. Beim Fügeprozeß kann diese Schicht einerseits als Toleranzausgleich und andererseits als Diffusionsbarriere für abdampfendes Chrom aus dem Kathodeninterkonnektor dienen.

Ein Brennstoffzellenstapel umfaßt mindestens zwei solcher Hochtemperaturbrennstoffzellen (Anspruch 25). Hierdurch werden höhere Leistungen erzielt.

Im folgenden wird die Erfindung unter anderem auch anhand der Beschreibung zweier Ausführungsbeispiele und unter Bezugnahme auf die beigefügten Figuren erläutert.

Es zeigen:
- Fig. 1:: Querschnitt durch eine Hochtemperaturbrennstoffzelle mit wellenförmig geprägter Folie zum Auffangen von Relativbewegungen.
- Fig. 2:: Querschnitt durch eine Hochtemperaturbrennstoffzelle mit Nickelnetz zum Auffangen von Relativbewegungen.

In beiden Figuren ist am rechten Bildrand jeweils eine kreisförmige Ausschnittsvergrößerung zur deutlicheren Darstellung eng aneinander liegender Komponenten eingezeichnet.

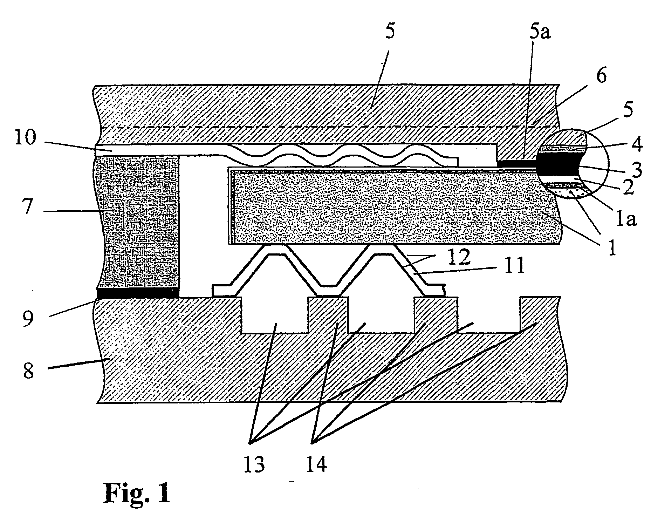

In Figur 1 besteht die Anode 1 aus NiO und 8YSZstabilisiertem ZrO₂. Die Stärke beträgt 1500 µm, wodurch die Anode als Anodensubstrat ausgebildet ist und tragende Funktion aufweist. Die Andodenfunktionsschicht 1a weist eine Stärke von 5 µm auf und besteht aus dem gleichen Material wie die Anode 1. Allerdings weist die Anodenfunktionsschicht 1a eine niedrigere Porosität als die Anode 1 auf, um eine gleichmäßige Beschichtung mit einem Elektrolyten 2 aus 8 YSZ zu gewährleisten. Die Anode 1 ist bis auf die untere Grundfläche vollständig mit dem Elektrolyt 2 beschichtet. Dessen Schichtstärke beträgt mindestens 5 µm. Der Elektrolyt 2 besitzt eine ausreichend niedrige elektrische Leitfähigkeit um die Anode 1 bis auf den Anodeninterkonnektor 8 zu seinen benachbarten Komponenten der Brennstoffzelle zu isolieren. Die Kathode 3 besitzt eine kleinere Grundfläche als die Anode 1 und ist auf dem Elektrolyt 2 angeordnet. Sie besteht standardmäßig aus La_{0,65}Sr₀,₃MnO₃ und besitzt eine Schichtdicke von 40 µm. Auf der Kathode 3 ist eine Kathodenkontaktschicht 4 angeordnet; sie besteht z.B. aus LaCoO₃, besitzt eine Schichtstärke von 75 µm, und ist nur in der Ausschnittsvergrößerung eingezeichnet. Unter anderem können Fertigungstoleranzen bei der Herstellung von bipolaren Platten bzw. Elektroden-Elektrolyt-Einheiten durch die Kathodenkontaktschicht 4 ausgeglichen werden, so daß schlecht leitende Kontaktpunkte zwischen Kathode 3 und Kathodeninterkonnektor 5 vermieden werden. Die Kathodenkontaktschicht 4 wird über eine vorstehende Fläche 5a des Kathodeninterkonnektors 5 kontaktiert. Durch die vorstehende Fläche 5a weist der Kathodeninterkonnektor 5 umlaufend einen Rand auf, dessen Höhe im Querschnitt kleiner ist als an besagter vorstehender Fläche 5a. Als Werkstoff kommt ein Stahl mit der Werkstoffnummer 1.4742 zum Einsatz. Der Kathodeninterkonnektor 5 ist als bipolare Platte ausgeführt. Die Gaskanäle sind durch eine Punkt-Strich-Linie 6 angedeutet. Der Gasfluß verläuft in der horizontalen Ebene, beispielsweise von links nach rechts. Der Kathodeninterkonnektor 5 ist an besagtem Rand über einen Rahmen 7 elektrisch isolierend mit einem Anodeninterkonnektor 8 verbunden. Der Rahmen 7 kann aus einer Eisen-Basis-Legierung bestehen. Er ist über eine elektrisch isolierende Schicht 9 mit dem Anodeninterkonnektor 8 verbunden. Der Rahmen 7 ist an der Kathodenseite mit einem an den Rändern planen Lochblech 10 mit elastischen Eigenschaften verbunden, das ansonsten wellenförmig geprägt ist, und über seine Wellentäler den Elektrolyt 2 umlaufend an der von der Kathode 3 nicht bedeckten Fläche gasdicht kontaktiert. Die Wellenberge des Lochblechs 10 kontaktieren den Kathodeninterkonnektor 5 an dessen Rand, der, wie erwähnt, im Querschnitt eine geringere Höhe aufweist als die vorstehende Fläche 5a, die die Kathodenkontaktschicht 4 kontaktiert. Das Lochblech 10 besteht aus Nicrofer^{®} 6025 HT, und weist eine Stärke von 100 µm auf. Allerdings kann die Stärke zwischen 50 und 300 µm variieren. Insgesamt weist das Lochblech 10 vier Wellentäler zur gasdichten Kontaktierung auf, es sind aber auch mehr oder weniger Wellen vorstellbar. Dadurch werden gasdichte Elektrodenräume gebildet. Der Rahmen 7 weist an der Kontaktfläche zum Anodeninterkonnektor 8 ein elektrisch isolierendes Mittel 9, z.B. aus Glaskeramik oder Glimmer auf. Auch der Anodeninterkonnektor 8 ist als bipolare Platte ausgeführt und enthält Gaskanäle 13, die durch Stege 14 voneinander getrennt sind. Die Betriebsmittel werden also für Kathode und Anode im Kreuzstromdesign herangeführt. Allerdings kann auch eine parallele Gasführung (Gleich- oder Gegenstromdesign) vorgesehen sein. Bei paralleler Gasführung ist eine homogenere Temperaturverteilung über die Brennstoffzelle zu erwarten. Die Stege 14 besitzen Anodenkontakt. Zwischen Anodeninterkonnektor 8 und Anode 1 ist ein elastisches Mittel 11 in Form einer mit Öffnungen versehenen, wellenförmig geprägten, elastischen Folie angeordnet. Dieses fängt die Relativbewegungen zwischen Anode und Anodeninterkonnektor auf und sorgt für einen Ausgleich der durch Wärmespannungen verursachten Ausdehnungen der Einzelkomponenten. Folie 11 kann aus Aluchrom^{®} YHf oder Nicrofer^{®} 6025HT bestehen. Die Stärke der Folie beträgt beispielsweise 100 µm, kann aber zwischen 50 und 300 µm variieren. Die Öffnungen dienen der Versorgung der Anode 1 mit Brennstoff. Der Brennstoff strömt aus den Gaskanälen 13 des Anodeninterkonnektors 8 durch die Öffnungen der Folie 11 an die Anode 1. Die Folie enthält beidseitig Nickel-Aluminium-Legierungen 12 zur Reduktion des Kontaktwiderstandes. Anodenseitige Folie 11, kathodenseitiges Lochblech 10 und vorstehende Kontaktfläche 5a des Kathodeninterkonnektors 5 sorgen somit für einen weitgehenden Ausgleich der v.a. bei Zyklierung auftretenden Wärmespannungen.

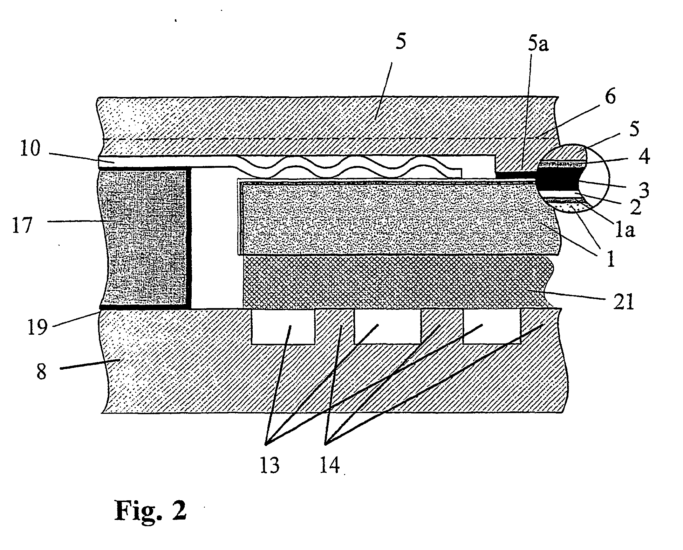

Figur 2 unterscheidet sich von Fig. 1 durch die elektrische Isolierung von Rahmen 17, dem Material des Rahmens selbst sowie dem zwischen Anodeninterkonnektor 8 und Anode 1 angeordneten elastischen Mittel 21 zum Auffangen von Relativbewegungen.

Der Rahmen 17 besteht in Fig. 2 aus einer aluminiumhaltigen Eisen-Basis-Legierung, z.B. Aluchrom^{®} YHf. Er ist mit dem Anodeninterkonnektor 8 verbunden und weist an seiner Oberfläche eine elektrisch isolierende Schicht 19 aus Aluminiumoxid auf. Ein Anteil von 5 % Aluminium im Rahmen ist ausreichend, um durch Glühen bei 1000 °C unter Luftzufuhr diese elektrisch isolierende Deckschicht 19 aus Aluminiumoxid auszubilden. Die isolierende Deckschicht 19 bedeckt die Oberfläche des Rahmens 17 vollständig und ist daher umlaufend dargestellt. Auch in Fig.2 ist die Höhe des Rahmens 17 so groß, daß zwischen Anodeninterkonnektor 8 und Anode 1 ein weiteres elastisches Mittel zum Auffangen von Relativbewegungen angeordnet werden kann. In Fig. 2 ist dies ein elastisches Nickelnetz 21. Es weist eine Stärke von 250 µm und eine Maschenweite von 200 µm auf. Der Durchmesser der Drähte beträgt 125 µm. Der Brennstoff strömt dann aus den Gaskanälen 13 des Anodeninterkonnektors 8 durch die Maschen des Nickelnetzes 21 an die Anode 1.

Die in Fig. 1 und Fig. 2 gezeigten Ausführungsformen können ohne Beeinträchtigung miteinander kombiniert werden. So kann in Fig. 1 auch ein aluminiumhaltiger Rahmen 17, wie in Fig. 2 beschrieben, vorliegen. Andererseits kann in Fig. 2 ein Rahmen 7, wie in Fig. 1 beschrieben, eingesetzt werden.

## Patentansprüche

1. Hochtemperaturbrennstoffzelle umfassend eine Anode (1), einen Anodeninterkonnektor (8), einen Elektrolyten (2), eine Kathode (3) sowie einen Kathodeninterkonnektor (5),
**dadurch gekennzeichnet,**
**dass** sowohl zwischen Anode (1) und Anodeninterkonnektor (8) als auch zwischen Elektrolyt (2) und Kathodeninterkonnektor (5) jeweils mindestens ein elastisches Mittel (10, 11, 12) zum Auffangen von Relativbewegungen angeordnet ist.

2. Hochtemperaturbrennstoffzelle nach Anspruch 1,
**dadurch gekennzeichnet,**
**daß** der Kathodeninterkonnektor (5) eine vorstehende Fläche (5a) aufweist, welche die Kathode (3) kontaktiert.

3. Hochtemperaturbrennstoffzelle nach einem der vorhergehenden Ansprüche,
**dadurch gekennzeichnet,**
**dass** zwischen Kathodeninterkonnektor (5) und Elektrolyt (2) ein wellenförmig geprägtes Lochblech als elastisches Mittel (10) angeordnet ist.

4. Hochtemperaturbrennstoffzelle nach einem der vorhergehenden Ansprüche,
**dadurch gekennzeichnet,**
**daß** die Kathode (3) eine kleinere Grundfläche als die Anode (1) aufweist.

5. Hochtemperaturbrennstoffzelle nach Anspruch 4,
**dadurch gekennzeichnet,**
**daß** das Lochblech (10) über seine Wellentäler den Elektrolyt (2) an der von der Kathode (3) nicht bedeckten Fläche gasdicht kontaktiert.

6. Hochtemperaturbrennstoffzelle nach einem der vorhergehenden Ansprüche,
**dadurch gekennzeichnet,**
**daß** der Kathodeninterkonnektor (5) über einen Rahmen (7, 17) elektrisch isolierend mit dem Anodeninterkonnektor (8) verbunden ist.

7. Hochtemperaturbrennstoffzelle nach Anspruch 6,
**dadurch gekennzeichnet,**
**daß** der Rahmen (7, 17) mit dem Lochblech (10) verbunden ist.

8. Hochtemperaturbrennstoffzelle nach einem der Ansprüche 3 bis 7,
**dadurch gekennzeichnet,**
**daß** zwischen den Wellentälern des Lochblechs (10) und dem Elektrolyt (2) eine Glaskeramikschicht angeordnet ist.

9. Hochtemperaturbrennstoffzelle nach einem der Ansprüche 6 bis 8,
**dadurch gekennzeichnet,**
**daß** der Rahmen (7, 17) aus einer aluminiumhaltigen Eisen-Basis-Legierung besteht.

10. Hochtemperaturbrennstoffzelle nach Anspruch 9,
**dadurch gekennzeichnet,**
**daß** die Oberfläche des Rahmens (7, 17) eine elektrisch isolierende Aluminiumoxidschicht (19) enthält.

11. Hochtemperaturbrennstoffzelle nach einem der Ansprüche 6 bis 10,
**dadurch gekennzeichnet,**
**daß** zwischen Rahmen (7, 17) und Anodeninterkonnektor (8) Mittel (9) zur elektrischen Isolierung des Rahmens (7, 17) angeordnet sind.

12. Hochtemperaturbrennstoffzelle nach Anspruch 11,
**dadurch gekennzeichnet,**
**daß** als Mittel (9) eine Glaskeramikschicht angeordnet ist.

13. Hochtemperaturbrennstoffzelle nach Anspruch 11,
**dadurch gekennzeichnet,**
**daß** als Mittel (9) eine Glimmerschicht angeordnet ist.

14. Hochtemperaturbrennstoffzelle nach einem der Ansprüche 6 bis 13,
**dadurch gekennzeichnet,**
**daß** zwischen Rahmen (7, 17) und Anode (1) Mittel zur elektrischen Isolierung angeordnet sind.

15. Hochtemperaturbrennstoffzelle nach Anspruch 14,
**dadurch gekennzeichnet,**
**daß** die Anode (1) eine Glaskeramikschicht als Mittel zur elektrischen Isolierung aufweist.

16. Hochtemperaturbrennstoffzelle nach Anspruch 14,
**dadurch gekennzeichnet,**
**daß** die Anode (1) bis auf die der Kathode (3) gegenüberliegende Seite mit dem Elektrolyt (2) beschichtet ist.

17. Hochtemperaturbrennstoffzelle nach einem der vorhergehenden Ansprüche,
**dadurch gekennzeichnet,**
**daß** zwischen Anode (1) und Anodeninterkonnektor (8) eine mit Öffnungen versehene, wellenförmig geprägte, elastische Folie (11) angeordnet ist.

18. Hochtemperaturbrennstoffzelle nach Anspruch 17,
**dadurch gekennzeichnet,**
**daß** die Folie (11) auf beiden Seiten zumindest teilweise Nickel-Aluminium-Legierungen (12) aufweist.

19. Hochtemperaturbrennstoffzelle nach einem der vorhergehenden Ansprüche,
**dadurch gekennzeichnet,**
**daß** der Anodeninterkonnektor (8) Aluminium enthält.

20. Hochtemperaturbrennstoffzelle nach einem der vorhergehenden Ansprüche,
**dadurch gekennzeichnet,**
**daß** der Anodeninterkonnektor (8) zumindest teilweise Nickel-Aluminium-Legierungen aufweist.

21. Hochtemperaturbrennstoffzelle nach einem der vorhergehenden Ansprüche,
**dadurch gekennzeichnet,**
**daß** mindestens eine Nickel enthaltende Folie mit
Kontaktflächen des Anodeninterkonnektors (8) für die Anode (1) durch Legierungsbildung verbunden ist.

22. Hochtemperaturbrennstoffzelle nach einem der Ansprüche 17 bis 21,
**dadurch gekennzeichnet,**
**daß** die Wellentäler der geprägten Folie (11) mit dem Anodeninterkonnektor (8) durch Legierungsbildung verbunden sind.

23. Hochtemperaturbrennstoffzelle nach einem der vorhergehenden Ansprüche,
**dadurch gekennzeichnet,**
**daß** zwischen Anode (1) und Anodeninterkonnektor (8) ein elastisches Nickelnetz (21) angeordnet ist.

24. Hochtemperaturbrennstoffzelle nach einem der vorhergehenden Ansprüche,
**dadurch gekennzeichnet,**
**daß** zwischen dem Kathodeninterkonnektor (5) und der Kathode (3) eine Kathodenkontaktschicht (4) angeordnet ist.

25. Brennstoffzellenstapel, umfassend mindestens zwei Hochtemperaturbrennstoffzellen nach einem der vorhergehenden Ansprüche.

## Claims

1. High temperature fuel cell comprising an anode (1), an anode interconnector (8), an electrolyte (2), a cathode (3) and a cathode interconnector (5),
**characterised in that**
at least one elastic means (10, 11, 12) for picking up relative movements is arranged both between the anode (1) and the anode interconnector (8) as well as between the electrolyte (2) and cathode interconnector (5).

2. High temperature fuel cell according to claim 1,
**characterised in that**
the cathode interconnector (5) has a projecting area (5a), which contacts with the cathode (3).

3. High temperature fuel cell according to one of the previous claims,
**characterised in that**
a wavy, embossed, perforated plate is arranged as an elastic means (10) between the cathode interconnector (5) and the electrolyte (2).

4. High temperature fuel cell according to one of the previous claims,
**characterised in that**
the cathode (3) has a smaller basic area than the anode (1).

5. High temperature fuel cell according to claim 4,
**characterised in that**
the perforated plate (10) contacts with the electrolyte (2) on the area not covered by the cathode (3) though its troughs in a gas tight way.

6. High temperature fuel cell according to one of the previous claims,
**characterised in that**
the cathode interconnector (5) is connected to the anode interconnector (8) through a frame (7, 17) in an electrically insulating way.

7. High temperature fuel cell according to claim 6,
**characterised in that**
the frame (7, 17) is connected to the perforated plate (10).

8. High temperature fuel cell according to one of claims 3 to 7,
**characterised in that**
a glass ceramic layer is arranged between the troughs of the perforated plate (10) and the electrolyte (2).

9. High temperature fuel cell according to one of claims 6 to 8,
**characterised in that**
the frame (7, 17) consists of an iron based alloy containing aluminium.

10. High temperature fuel cell according to claim 9,
**characterised in that**
the surface of the frame (7, 17) contains an electrically insulating aluminium oxide layer (19).

11. High temperature fuel cell according to one of claims 6 to 10,
**characterised in that**
means (9) for electrical insulation of the frame (7, 17) are arranged between the frames (7, 17) and anode interconnector (8).

12. High temperature fuel cell according to claim 11,
**characterised in that**
a glass ceramic layer is arranged as a means (9).

13. High temperature fuel cell according to claim 11,
**characterised in that**
a mica layer is arranged as a means (9).

14. High temperature fuel cell according to one of claims 6 to 13,
**characterised in that**
means for electrical insulation are arranged between the frames (7, 17) and the anode (1).

15. High temperature fuel cell according to claim 14,
**characterised in that**
the anode (1) has a glass ceramic layer as a means for electrical insulation.

16. High temperature fuel cell according to claim 14,
**characterised in that**
the anode (1) is covered with the electrolyte (2) as far as the side opposite the cathode (3).

17. High temperature fuel cell according to one of the previous claims,
**characterised in that**
a wavy, embossed, elastic foil (11) provided with openings is arranged between the anode (1) and the anode interconnector (8).

18. High temperature fuel cell according to claim 17,
**characterised in that**
the foil (11) has at least partly nickel aluminium alloys (12) on both sides.

19. High temperature fuel cell according to one of the previous claims,
**characterised in that**
the anode interconnector (8) contains aluminium.

20. High temperature fuel cell according to one of the previous claims,
**characterised in that**
the anode interconnector (8) has at least partly nickel aluminium alloys.

21. High temperature fuel cell according to one of the previous claims,
**characterised in that**
at least one foil containing nickel is connected to the contact areas of the anode interconnector (8) for the anode (1) through alloy formation.

22. High temperature fuel cell according to one of claims 17 to 21,
**characterised in that**
the troughs of the embossed foil (11) are connected to the anode interconnector (8) through alloy formation.

23. High temperature fuel cell according to one of the previous claims,
**characterised in that**
an elastic nickel mesh (21) is arranged between the anode (1) and the anode interconnector (8).

24. High temperature fuel cell according to one of the previous claims,
**characterised in that**
a cathode contact layer (4) is arranged between the cathode interconnector (5) and the cathode (3).

25. Fuel cell stack comprising at least two high temperature fuel cells according to one of the previous claims.

## Revendications

1. Cellule à combustible haute température, comprenant une anode (1), un interconnecteur d'anode (8), un électrolyte (2), une cathode (3) ainsi qu'un interconnecteur de cathode (5),
**caractérisée**
**en ce qu'**au moins un moyen élastique (10, 11, 12) destiné à amortir des mouvements relatifs est disposé entre l'anode (1) et l'interconnecteur d'anode (8), ainsi qu'entre l'électrolyte (2) et l'interconnecteur de cathode (5).

2. Cellule à combustible haute température selon la revendication 1,
**caractérisée**
**en ce que** l'interconnecteur de cathode (5) comporte une surface en saillie (5a) qui contacte la cathode (3).

3. Cellule à combustible haute température selon l'une des revendications précédentes,
**caractérisée**
**en ce qu'**une plaque de tôle perforée, estampée de manière à être ondulée, est disposée comme moyen élastique (10) entre l'interconnecteur de cathode (5) et l'électrolyte (2).

4. Cellule à combustible haute température selon l'une des revendications précédentes,
**caractérisée**
**en ce que** la cathode (3) présente une surface de base inférieure à celle de l'anode (1).

5. Cellule à combustible haute température selon la revendication 4,
**caractérisée**
**en ce que** la plaque de tôle perforée (10) contacte par ses creux d'onde l'électrolyte (2) sur la surface non recouverte par la cathode (3), de manière à obtenir une étanchéité aux gaz.

6. Cellule à combustible haute température selon l'une des revendications précédentes,
**caractérisée**
**en ce que** l'interconnecteur de cathode (5) est raccordé par un cadre (7, 17) à l'interconnecteur d'anode (8), de manière à obtenir une isolation électrique.

7. Cellule à combustible haute température selon la revendication 6,
**caractérisée**
**en ce que** le cadre (7, 17) est raccordé à la plaque de tôle perforée (10).

8. Cellule à combustible haute température selon l'une des revendications 3 à 7,
**caractérisée**
**en ce qu'**une couche de céramique de verre est disposée
entre les creux d'onde de la plaque de tôle perforée (10) et l'électrolyte (2).

9. Cellule à combustible haute température selon l'une des revendications 6 à 8,
**caractérisée**
**en ce que** le cadre (7, 17) est constitué d'un alliage à base de fer à teneur en aluminium.

10. Cellule à combustible haute température selon la revendication 9,
**caractérisée**
**en ce que** la surface du cadre (7, 17) comprend une couche d'oxyde d'aluminium (19) électriquement isolante.

11. Cellule à combustible haute température selon l'une des revendications 6 à 10,
**caractérisée**
**en ce qu'**un moyen (9) pour l'isolation électrique du
cadre (7, 17) est disposé entre le cadre (7, 17) et l'interconnecteur d'anode (8).

12. Cellule à combustible haute température selon la revendication 11,
**caractérisée**
**en ce qu'**une couche de céramique de verre est prévue en tant que moyen (9).

13. Cellule à combustible haute température selon la revendication 11,
**caractérisée**
**en ce qu'**une couche de mica est prévue en tant que moyen (9).

14. Cellule à combustible haute température selon l'une des revendications 6 à 13,
**caractérisée**
**en ce qu'**un moyen d'isolation électrique est disposé entre le cadre (7, 17) et l'anode (1).

15. Cellule à combustible haute température selon la revendication 14,
**caractérisée**
**en ce que** l'anode (1) comporte une couche de céramique de verre en tant que moyen d'isolation électrique.

16. Cellule à combustible haute température selon la revendication 14,
**caractérisée**
**en ce que** l'anode (1) est revêtue de l'électrolyte (2), à l'exception de la face opposée à la cathode (3).

17. Cellule à combustible haute température selon l'une des revendications précédentes,
**caractérisée**
**en ce qu'**une feuille élastique (11) pourvue d'ouvertures, estampée de manière à être ondulée, est disposée entre l'anode (1) et l'interconnecteur d'anode (8).

18. Cellule à combustible haute température selon la revendication 17,
**caractérisée**
**en ce que** la feuille (11) comporte au moins partiellement des alliages nickel-aluminium (12) sur ses deux faces.

19. Cellule à combustible haute température selon l'une des revendications précédentes,
**caractérisée**
**en ce que** l'interconnecteur d'anode (8) contient de l'aluminium.

20. Cellule à combustible haute température selon l'une des revendications précédentes,
**caractérisée**
**en ce que** l'interconnecteur d'anode (8) comporte au moins partiellement des alliages nickel-aluminium.

21. Cellule à combustible haute température selon l'une des revendications précédentes,
**caractérisée**
**en ce qu'**au moins une feuille contenant du nickel est raccordée par formation d'alliage à des surfaces de contact de l'interconnecteur d'anode (8) pour l'anode (1).

22. Cellule à combustible haute température selon l'une des revendications 17 à 21,
**caractérisée**
**en ce que** les creux d'onde de la feuille estampée (11) sont raccordés à l'interconnecteur d'anode (8) par formation d'alliage.

23. Cellule à combustible haute température selon l'une des revendications précédentes,
**caractérisée**
**en ce qu'**un réseau de nickel élastique (21) est disposé entre l'anode (1) et l'interconnecteur d'anode (8).

24. Cellule à combustible haute température selon l'une des revendications précédentes,
**caractérisée**
**en ce qu'**une couche de contact de cathode (4) est disposée entre l'interconnecteur de cathode (5) et la cathode (3).

25. Pile de cellules à combustible, comprenant au moins deux cellules à combustible haute température selon l'une des revendications précédentes.
